(19) Europäisches Patentamt
European Patent Office
Office européen des brevets

(11) **EP 3 840 176 B1**

(12) **EUROPEAN PATENT SPECIFICATION**

(45) Date of publication and mention
of the grant of the patent:
**13.12.2023 Bulletin 2023/50**

(21) Application number: **20214767.4**

(22) Date of filing: **16.12.2020**

(51) International Patent Classification (IPC):
*H02J 50/40* (2016.01)    *H02J 50/60* (2016.01)
*B60L 53/124* (2019.01)    *H02J 50/70* (2016.01)
*H02J 50/12* (2016.01)

(52) Cooperative Patent Classification (CPC):
**H02J 50/402; B60L 53/124; H02J 50/12;**
**H02J 50/60; H02J 50/70;** Y02T 10/70;
Y02T 10/7072; Y02T 90/14

(54) **APPARATUS FOR INDUCTIVE POWER TRANSFER**

VORRICHTUNG FÜR INDUKTIVE LEISTUNGSÜBERTRAGUNG

APPAREIL DE TRANSFERT DE PUISSANCE INDUCTIVE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.12.2019 NL 2024485**

(43) Date of publication of application:
**23.06.2021 Bulletin 2021/25**

(73) Proprietor: **Prodrive Technologies Innovation**
**Services B.V.**
**5692 EM Son en Breugel (NL)**

(72) Inventor: **VOS, Danny**
**5692 EM Son (NL)**

(74) Representative: **IP Maison**
**Sportweg 6**
**2751 ER Moerkapelle (NL)**

(56) References cited:
WO-A1-2019/057777    US-A1- 2015 323 694
US-A1- 2016 006 260    US-A1- 2017 033 609
US-A1- 2019 271 791

**Description**

**Technical field**

The present invention is related to devices and methods for detecting foreign objects within a magnetic field space, in particular in the magnetic field space of a wireless power transfer system.

**Background art**

In wireless power transfer by means of induction an electromagnetic field is generated by a transmitter coil in order to transfer electric power received by a receiver coil. Depending on various parameters, e.g. the type of inductive coupling or distance between the transmitter coil and the receiver coil, the region where the electromagnetic field is produced may be accessible to foreign objects. These foreign objects may result in energy loss and produce hazardous situations when they react to the generated electromagnetic field. Metallic or conductive foreign objects for instance may absorb the electromagnetic field in part through induced eddy currents and as a consequence generate heat. For safety reasons and to reduce energy loss it is important that these foreign objects can be detected accurately.

For low power applications like the charging of a mobile phone a foreign object can be detected by determining the difference between the transmitted power and the received power. However, in high power applications the amount of energy lost is low compared to the total amount of transmitted and received power. This makes it difficult to determine the presence of a foreign object based on the difference between the transmitted power and the received power. It is particularly difficult to detect small foreign objects that will barely influence the transmission efficiency between the transmitter coil and the receiver coil, but that may cause hazardous situations by generating considerable heat in a small volume.

US2015/0323694 describes a foreign object detection device in which the presence of a foreign object is measured with an array of detector coils acting as magnetic loop antennas. The device comprises two types of coils: on the one hand a source coil, which can be the power transmitter coil used for wireless power transfer or one or more specific auxiliary coils and which are driven for generating a magnetic field, and on the other hand one or more detector coils which are held passive and act as receiver. The magnetic field generated by the source coil induces a current and voltage in the one or more detector coils. The magnetic field, and therefore the voltage and current induced in the detector coil is influenced by foreign objects placed in the vicinity of the detector coils.

The auxiliary coils are used at times when the power transmitter coil is not providing a magnetic field, e.g. when no power is transferred. The auxiliary coils are therefore required at times when a vehicle is approaching towards the power transmitting coil and before charging operation begins. A disadvantage of the above system is therefore that two sets of coils - auxiliary coils and detector coils - are needed for foreign object detection, which adds complexity and cost to the power transfer system.

Another disadvantage of the above system is that the coupling between the transmitter coil and the set of detector coils is not only depending on the presence of foreign objects, but also very sensitive to the presence of non-dissipating magnetic material (ferrite). Within wireless power transfer systems, non-dissipating magnetic material with a $\mu_r > 1$ (ferrite) is required at both the power transmitting side and the power receiver side in order to shape the magnetic field. Due to mechanical variation of the assembly (e.g. temperature variation or mechanical stress), the position of the ferrite with respect to the foreign object detector coils may vary, possibly resulting in false triggers of the foreign object detection (FOD) system. The sensitivity to this mechanical variation may be much larger than the sensitivity to a typical small foreign object (e.g. a small coin).

US 9,178,361 describes the use of decay in a resonant circuit to detect foreign objects in wireless power transfer applications. The resonant circuit comprises a detection coil and a capacitor, which form a tank circuit. This tank circuit can be charged by an AC or a DC external power source. When the external power source is subsequently removed, the energy will oscillate between the coil and the capacitor. The amplitude of this oscillation and thus the amount of energy stored in the tank circuit will dissipate with time. In the presence of a foreign object the speed of this decay will increase. Therefore, this speed of decay can be used to detect the presence of foreign objects. Foreign objects that have a higher coupling factor with the detection coil will be detected more easily, because the speed of decay increases with increasing coupling factor. With such a FOD detection system, the influence of parasitic components can be largely reduced.

A disadvantage of the above system is that the intermittent character of charging the detection circuitry and subsequently measuring decay does not allow a continuous detection of foreign objects. In addition, the inductive power transfer system must be switched off during detection procedure, since the magnetic field for power transfer influences the magnetic field for FOD. By consequence, it becomes very difficult to detect foreign objects during active periods of inductive power transfer.

## Summary of the invention

It is an object of the present invention to provide systems and methods for detecting foreign objects in a magnetic field which are less complex and/or more effective. It is an object of the present invention to provide such systems that are able to discriminate between relevant and non-relevant foreign objects with an increased detection range. It is an object to provide such systems which can operate independently of the operation of the wireless (inductive) power transfer system.

It is an object of the present invention to provide systems and methods which are more reliable in detecting foreign objects. It is an object to provide such systems allowing for more accurately detecting a position of the foreign object and/or allowing for making absolute measurements.

According to a first aspect of the invention, there is therefore provided an apparatus for inductive power transfer as set out in claim 1. The apparatus comprises a foreign object detecting device. The foreign object detecting device comprises means for generating an electromagnetic field to detect foreign objects in a predetermined space and a plurality of detection coils which are advantageously coplanar. The plurality of detection coils are coupled in respective tank circuits (resonant circuits or LC circuits). Advantageously, though not necessarily, the means for generating an electromagnetic field are, or comprise the detection coils, i.e. the electromagnetic field for detecting foreign objects can both be generated and be sensed by the detection coils. Alternatively, the means for generating the electromagnetic field can operate coils distinct from the detection coils. The foreign object detecting device can comprise a driver module coupled to the plurality of detection coils for sensing the electromagnetic field and for determining the presence of a foreign object.

The foreign object detecting device comprises a switching device configured to selectively close the tank circuits, advantageously in a mutually exclusive manner, i.e. one or some of the tank circuits being closed, while the other tank circuits being open. Tank circuits can be opened and closed by the switching device opening respectively closing a terminal of the respective detection coil.

By selectively closing the tank circuits related to the plurality of detection coils, the detection coils can be operated in a sequential or alternating manner to sense foreign objects without interference from the other detection coils. The detection coils are therefore able to measure independently of one another as they can be mutually decoupled. Tank circuits of the detection coils that are not sensing at a given time instant can be opened, thereby avoiding induced currents through the non-operating coils, i.e. magnetic coupling between the coils is prevented. As a result, properties of the foreign object, such as size and location can be determined with greater ease and reliability by selectively (e.g., sequentially or alternatingly) operating the plurality of detection coils/tank circuits. As a further advantage, sequentially operating the plurality of detection coils allows to read out the detection coils at different time instants, which reduces processor usage and allows for reducing component costs.

The tank circuits corresponding to the plurality of detection coils can be formed with separate capacitors, in which case the switching device comprises a switch in each of the tank circuits. In such embodiments, wherein each of the tank circuits comprise distinct capacitors, the distinct capacitors preferably have substantially equal or identical capacitance. Alternatively, the tank circuits can be formed with one or more common capacitors, which are switchingly connected to the plurality of detection coils through the switching device.

According to the present invention, one detection coil of the plurality of detection coils has a dimension different than another one detection coil of the plurality of detection coils. The dimension refers to at least one of a cross section (e.g. surface area of an outer winding) and a number of windings. Detection coils of the plurality of detection coils are dimensioned in accordance with the magnetic shield (e.g. amount, proximity) such that a substantially equal resonance frequency is achieved for the tank circuits. The advantage is that this is an efficient way to achieve substantially equal resonant frequencies, without resorting to creating more clearance towards the magnetic shield, reducing the detection range of the detection coils (e.g. by reducing the surface area) or tuning capacitances. Furthermore, a substantially equal resonant frequency in different environmental conditions (e.g. temperature) may be maintained more easily.

According to further aspects of the invention, there is provided a method for detecting foreign objects in a predetermined space, such as a space of a first magnetic field of a power transfer system, as set out in the appended claim 15.

Additionally, in advantageous aspects, the area enclosed by each of the plurality of detection coils may be different. The enclosed area may vary based on the relative position of each of the detection coils in order to cope with different environmental conditions, such as vicinity of ferrite layers, etc. which may affect magnetic inductance. Advantageously, the area enclosed by each of the plurality of detection coils is selected such as to obtain an equal inductance for each of the detection coils. Providing detection coils having an equal self-inductance has the benefit that under normal operating conditions (thus not exposed to foreign objects) such coils have substantially equal resonance frequencies and substantially respond the same way (e.g. have equal losses), because such responses are mostly frequency dependent. Consequently, measurements of such responses (e.g. measured losses) can be directly compared between the different coils without the need for calibration. Furthermore, object detection based on such comparison is very reliable under varying conditions. The detection coils and other components of the system (e.g. magnetic shield) are exposed to substantially the same conditions (e.g. temperature of the environment), which may also drift during, and optionally as a consequence of, operating the object detection system. Therefore, the different object detection coils remain attuned to each other, allowing simple comparison between measurements performed on these detection coils under (nearly) all conditions.

The use of object detection coils having an equal self-inductance has a further benefit that it allows for simple filtering small deviations of the measured responses common to multiple detection coils (e.g. by means of a threshold value), because these are likely to be caused by changes within the object detection device itself (e.g. component value drift) or may be caused by environmental changes which are substantially common to multiple detection coils (e.g. temperature change of the environment which changes the resistance of the detection coils). The importance of such benefit is underlined by the fact that the power losses in many of the materials used in the vicinity of the object detection coils show a strong non-linear frequency dependence. This is for example at least in part caused by the skin effect in nearby conductive structures and/or nearby ferrite materials which typically have a Steinmetz coefficient from 1.2 up to nearly 2. This non-linear frequency dependent behaviour results in a significant increase in complexity when comparing measurements between detection coils not having an equal self-inductance.

Embodiments wherein tank circuits are provided comprising one or more common capacitors, which are switchingly connected to the plurality of detection coils through the switching device have the benefit that a drift from the driver circuit, for instance caused by environmental conditions (e.g. temperature changes that may cause thermal expansion) can be common to all detection coils and the resonant frequencies can even be more closely matched. This further improves object detection based on comparison of measurements between the detection coils.

Advantageously, a total area enclosed by the plurality of detection coils is substantially coincident or completely overlaps with an area enclosed by the power transfer coil.

Preferably, each one of the plurality of detection coils are configured for being exposed to parts of the electromagnetic field having an equal strength and an opposing sign. This allows foreign objects to be detected while power is being transferred between power transfer coils of an inductive power transfer system, without being interfered by the field generated for power transfer. The present invention is ideally suited for being combined with the measures of the object detection system as described in the co-pending application with publication number WO 201905777 A1. This obsoletes measures according to the prior art for compensating the mutual inductance between power transfer coils and the coils of the object detection system.

## Brief description of the figures

Aspects of the invention will now be described in more detail with reference to the appended drawings, wherein same reference numerals illustrate same features and wherein:

Figure 1 represents an inductive power transfer system according to aspects of the invention;
Figure 2 represents a block scheme of an example driver module, including a switching device and a capacitor device, and the plurality of detection coils according to aspects of the present invention;
Figure 3 represents a configuration of superposition of power transmitter coil and plurality of detection coils for foreign object detection according to aspects of the invention, in which the power transmitter coil is wound in a figure-8 shape;
Figure 4 represents an alternative block scheme to the scheme of Fig. 2;
Figure 5 represents an electric diagram of a driver circuit and control unit according to aspects of the invention, for driving a foreign object detection coil and detecting a foreign object;
Figure 6 represents a block diagram of the control unit of the circuit of Fig. 4.

## Description of embodiments

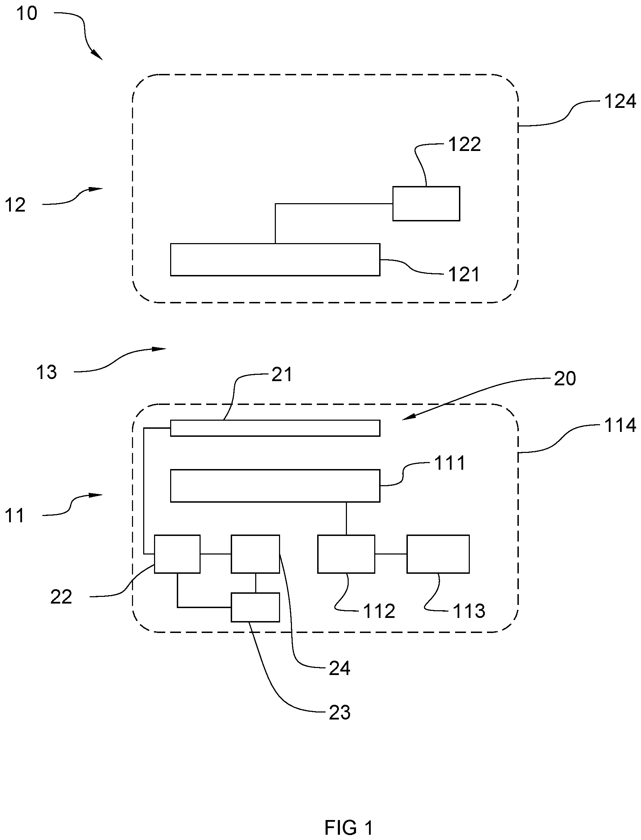

Referring to Fig. 1, a wireless inductive power transfer (IPT) system 10 is illustrated. The IPT system 10 comprises a transmitter system 11, which includes a power source 113, transmitter electronics 112, and a power transmitter coil 111. Transmitter system 11 is configured for generating a magnetic field for inductive power transfer. To this end, the power source 113 supplies the transmitter electronics 112 with power. The power can be alternating current (AC) or direct current (DC). The transmitter electronics 112 conditions the power so that the power transmitter coil 111 receives an electrical AC current which generates an electromagnetic field.

The IPT system 10 further comprises a receiver system 12, which includes a power receiver coil 121, and receiver electronics 122. An interface 13 separates the transmitter system 11 from the receiver system 12. The interface typically comprises an air gap spacing apart transmitter system 11 and receiver system 12. The electromagnetic field generated by power transmitting coil 111 is inductively coupled into the power receiver coil 121. In this way, power can be transferred across the interface 13 disposed between the power transmitter coil 111 and the power receiver coil 121. Depending on the nature of the interface 13, the interface can absorb or otherwise attenuate the transmitted power so that the received power is less than the transmitted power.

Objects located in the power transmission path, i.e. in the magnetic field of power transmitter coil 111, can disturb the power transfer. The power transmission path extends across the interface 13. There are two broad types of objects that can absorb energy transferred in the IPT system. The first type includes conductive components or objects that are part of the device being powered or charged by the IPT system 10. These conductive components of the device are often called friendly parasitic components. The second type includes conductive parts or objects that are not part of the device being charged. These are referred to as foreign objects. Some of these foreign objects will interact with the magnetic field of the IPT system and produce heat. The heating of the foreign object may be either caused by its electrical resistance for the eddy currents induced in foreign objects comprising conductive non-magnetic materials (e.g. aluminium or copper), or by magnetic hysteresis losses in foreign objects comprising non-conductive magnetic materials (e.g. ferrites), or by a combination of both in foreign objects comprising conductive magnetic materials (e.g. iron) or in foreign objects comprising conductive non-magnetic materials and non-conductive magnetic materials (e.g. metal alloy or metal composite).

Typically, the power transmitter coil 111 is encased in a housing 114, which may further encase the transmitter electronics 112 and optionally the power source 113. Housing 114 and the components contained therein may be referred to as a base pad or ground assembly. Optionally, another housing 124 encases the power receiver coil 121 and possibly receiver electronics 122. Housing 124 and the components contained therein may be referred to as a mobile pad or mobile assembly, e.g. a vehicle assembly. Portions of the housing 114 and of the housing 124 can be located in the interface 13 and in the power transmission path.

For purposes of the present description, the power transmitter coil 111 and the power receiver coil 121 may both be referred to as (power) transfer coils.

IPT system 10 further comprises a foreign object detection (FOD) device 20 according to aspects of the invention. FOD device 20 comprises a plurality of detection coils 21 coupled to a driver module 22. Driver module 22 is charged by a power source, which may be the power source 113 that powers the transmitter system 11, or may be a separate source 23. Power sources 113 and 23 may refer to interfaces receiving power form an external power supply. A control unit 24 may be coupled to driver module 22 and may be coupled to power source 23.

As shown in Fig. 1, FOD device 20 is encased inside housing 114 of the transmitter system 11. Advantageously, the detection coils 21 and power transmitter coil 111 are superposed. As illustrated, detection coils 21 are disposed on top of power transmitter coil 111. Detection coils 21 can alternatively be disposed underneath power transmitter coil 111. It is alternatively or additionally possible to encase the FOD device 20 inside housing 124 of the receiver system 12 in a similar manner, or both inside housing 124 of the receiver system 12 and housing 114 of the transmitter system 11.

It will be convenient to note that either one of the power transfer coils, the detection coils, or both can be planar coils, in which multiple loops of a conductive wire or cable are wound in a same plane. The detection coils are advantageously coplanar. Alternatively, either coils can comprise windings in three-dimensional space, such as forming a helix.

The driver module 22 is configured for supplying an AC current to detection coils 21 which generates a magnetic field which may be distinct from the magnetic field generated by the power transmitter coil 111. The magnetic field of detection coil 21 extends at least through a portion of the power transmission path, e.g. at least through a portion of the interface 13. Hence, in the present example the detection coils are configured to both generate the electromagnetic field and to sense the (induced) magnetic field for detecting foreign objects. It will be convenient to note that the electromagnetic field can be generated by other means, e.g. other coils distinct from the detection coils, with the detection coils only configured to sense foreign objects by sensing changed properties of the magnetic field.

The frequency of the current in detection coils 21 is advantageously different from the frequency of the current in power transmitter coil 111. Typically a small power dissipation will occur in the detection coils 21, the driver module 22 and other parasitic components of FOD device 20 and/or IPT system 10, so that some electric power is continuously required to maintain a steady magnetic field.

According to one aspect, the driver module 22 is configured to operate the detection coils 21, at least in sensing mode, in a mutually exclusive fashion. When one detection coil is operated to sense foreign objects, the other ones are not operated, allowing to avoid measurements interfering one another. Advantageously, when one of the detection coils is operated, the electrical circuits of the other, non-operated detection coils are opened so that magnetic coupling between the different detection coils is prevented.

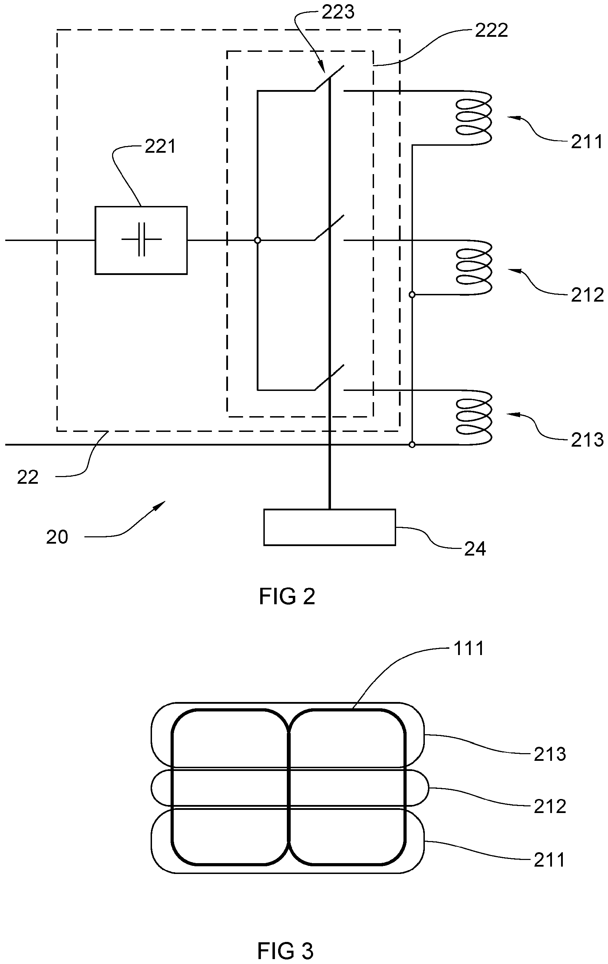

Referring to Fig. 2, the driver module 22 advantageously comprises a capacitor device 221. The capacitor device 221 may comprise a single capacitor, or be a capacitor bank comprising a plurality of capacitors. A switching device 222 connects the capacitor device 221 to each of the detection coils 211-213, e.g. through a network of switches 223. In the Fig. 2, three detection coils are depicted, but there may be more than three detection coils, or only two detection coils, all advantageously arranged in a coplanar fashion.

The switches 223 are operated e.g. through control unit 24, and such that only one of the detection coils is connected to the capacitor device 221 at a time. More particularly, the switches 223 are operated to close alternatingly in a sequential fashion. By so doing, the detection coils 211-213 are operated sequentially and in a mutual exclusive fashion. That is, a closed detection circuit is formed in only one detection coil at a time, the detection circuits of the other detection coils being left disconnected and therefore open. As a result, the other detection coils do not interfere with measurements made with the sensing/operated detection coil.

It will be convenient to note that detection coils may be arranged in groups, each group formed by two or more detection coils, and the above reasoning can be applied to operating the groups sequentially. This may be particularly useful in case some of the detection coils are spaced apart at a sufficient distance that they are not magnetically coupled (e.g. magnetic coupling is insignificant with regards to the measurements). Such uncoupled coils may be grouped to operate simultaneously.

According to one advantageous aspect, detection coils 211-213 are driven with a resonant frequency. To this end, the capacitor device 221 and each of the detection coils 211-213 may together form a resonant tank circuit. Using a resonant tank circuit may improve the detection sensitivity of the FOD device 20. By using a resonant circuit, in particular with a capacitor arranged in parallel with the coil, the driving circuit may be simplified as it reduces the current and/or voltages in the driving circuit. A resonant tank circuit allows for driving the detection coils with a resonant frequency.

The detection coils 211-213 are configured to have equal self-inductance. This may simplify object detection methods, since the output of each of the detection coils can easily be compared with one another. Having equal self-inductance also allows for driving all detection coils with a same resonance frequency.

Referring to Fig. 3, in order to obtain equal self-inductance in all detection coils 211-213, it may be required to adapt the size of the detection coil based on its position within the housing of the power transfer system. It is well-known that a power transfer system comprises a ferrite layer underneath the power transfer coil in order to obtain a directional emission of the magnetic field towards the space (13, see Fig. 1) above the coil. The ferrite layer obviously influences the magnetic field induced by the detection coils as well. By way of example, in some embodiments where three detection coils 211-213 are arranged in an array, it may be required to make the middle detection coil 212 somewhat smaller than the outer detection coils 211 and 213, since the middle detection coil in such case would "see" a higher amount of ferrite as compared to the outer coils. One example of adapting the size of the detection coils is to adapt the area enclosed by the detection coil.

Adapting the detection coils to have equal self-inductance simplifies requirements to drive the detection coils with equal resonance frequencies, since in this case one same capacitor device 221 can be used for coupling to each of the three detection coils 211-213 to obtain identical resonant tanks. In such case, the switching device 222 may be formed as a multiplexer.

The self-inductance of each detection coil may be determined when there is no mutual inductance between the detection coil for which the self-inductance is determined and the other detection coils. The self-inductance may be determined while the circuits comprising the other detection coils are open, such that no currents can circulate in the windings of the other detection coils. For instance, the terminals of the other detection coils are not operatively coupled to a tank circuit when determining the self -inductance.

The self-inductance (L) of the detection coil can be determined, while the described mutual inductance is prevented, by applying a sinusoidal AC voltage with a frequency (f) at or near an operating frequency of the detection coil to the terminals of the detection coil that is to be tested and determining an impedance (Z) using Formula 1, for instance by measuring a voltage ($U_{rms}$) and a current ($I_{rms}$) at the terminals of the tank circuit, and determining a phase angle ($\varphi$) between the voltage and the current using for instance a scope.

$$Z = U_{rms} / I_{rms} \qquad \text{Formula 1}$$

Subsequently, a reactance ($X_L$) can be determined from the impedance (Z) for the phase angle ($\varphi$) using Formula 2.

$$X_L = \text{Im}(Z) = Z * \sin(\varphi) \qquad \text{Formula 2}$$

Alternatively, an impedance analyzer may be used to directly determine the impedance, comprising a resistance and a reactance ($X_L$), which are the real part of the impedance and the imaginary part of the impedance, respectively.

Once the reactance ($X_L$) is determined, the self-inductance (L) can be determined by solving Formula 3.

$$L = X_L / (2*\pi*f) \qquad \text{Formula 3}$$

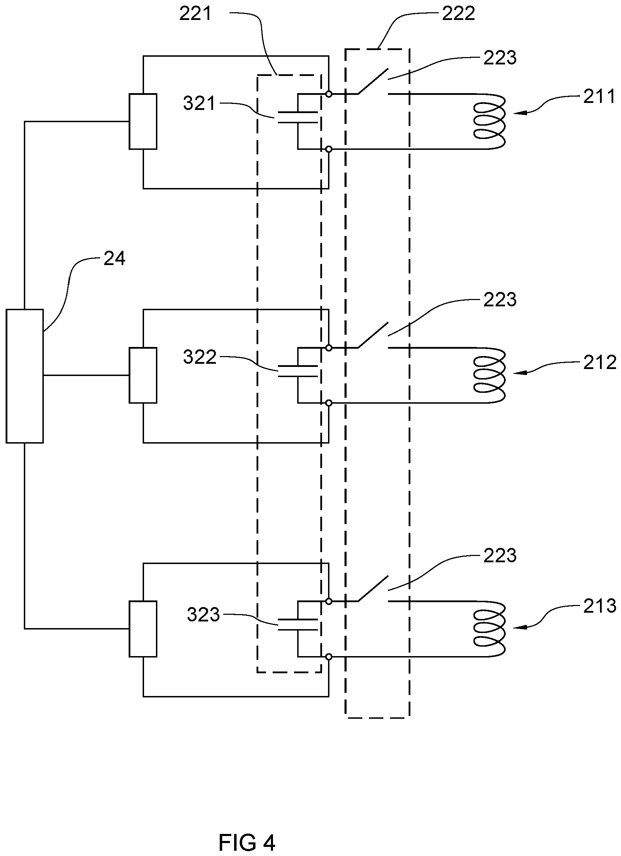

Alternatively, as shown in Fig. 4, the capacitor device 221 comprises a distributed system of capacitors 321-323, each capacitor forming a resonant tank (LC) circuit with a respective detection coil 211-213. A switch 223 is provided in each resonant tank circuit to open the circuit when it is not operated. Switches 223 are closed one at a time when the respective resonant tank circuit is operated for making measurements. Hence, during operation of one of the resonant tank circuits, no current can flow through the other resonant tank circuits and the circuits are decoupled. The capacitors 321-323 can have identical or different capacitance.

In a yet alternative example, it is possible to adapt the capacitance of capacitor device when connected to a different detection coil. The capacitor device may be formed as a capacitor bank and the switching device may be configured to make switched connections of different capacitor combinations and different detection coils. The different capacitors may be switched in different combinations when the capacitor device is being connected to a different detection coil. By so doing, a same resonant frequency may be obtained for each of the detection coils, which may have equal size.

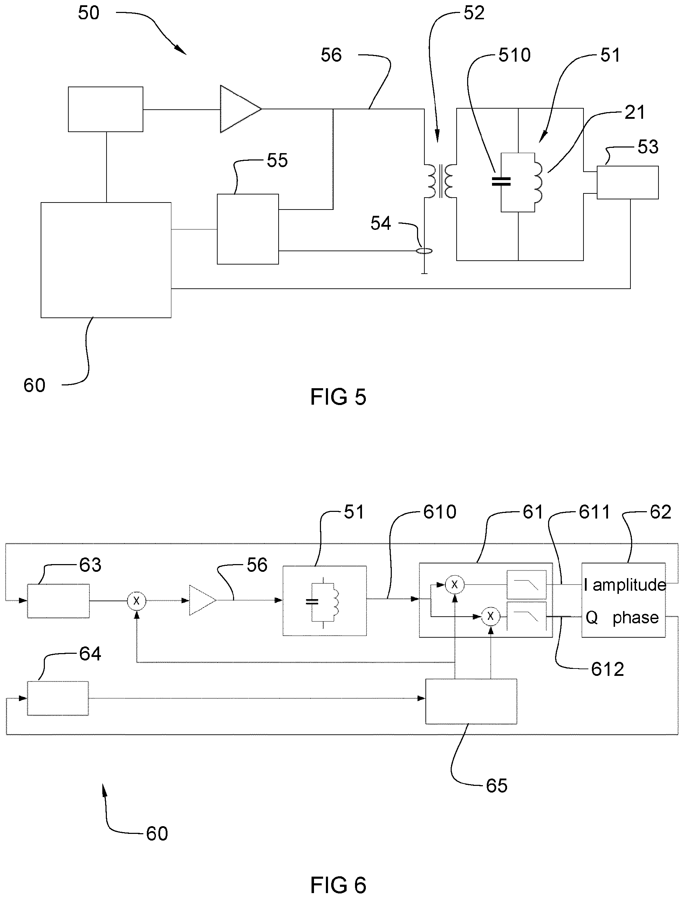

Referring to Fig. 5, an example driver circuit 50 realizes a resonant tank circuit 51 when a capacitor 510 is alternatingly connected in parallel to one of the detection coils of 21. Tank circuit 51 is connected to the secondary side of a transformer 52, advantageously realizing a voltage step up. A voltage metering circuit 53 is coupled over tank circuit 51 and is configured to measure an amplitude of the resonance oscillation. The voltage metering circuit 53 is coupled to the control unit 60 in order to advantageously control the amplitude of oscillation to a steady or constant, and possibly predefined value. Alternatively, the voltage metering circuit 53 can be replaced with a current metering circuit to measure a current amplitude of the oscillation in the tank circuit 51. The primary side of transformer 52 is advantageously supplied with a controlled voltage and/or current. The voltage and current are advantageously measured by current meter 54 and voltage meter 55. These values are advantageously converted to a digital value, e.g. by analog to digital converters (ADC) which may be arranged in block 55. The current meter 54 and voltage meter 55 are coupled to control unit 60.

Control unit 60 may be configured to determine an electrical power supplied to the primary side of transformer 52, and hence to the tank circuit 51, on the basis of the values measured by current meter 54 and voltage meter 55. Control unit 60 may be configured to control a voltage and/or current that is applied to the primary side of transformer 52, e.g. based on the signal which is fed back by voltage or current metering circuit 53.

One example implementation of control unit 60 is illustrated in Fig. 6. The control unit 60 implements a coherent detection method to determine the power injected in resonant tank circuit 51. This reduces the detection bandwidth to a narrow band around the oscillation frequency of the resonant tank which greatly increases the detection sensitivity by filtering external disturbances. The oscillation measured e.g. with metering circuit 53 is input at 610 into block 61. In block 61, the oscillation signal is correlated with two orthogonal waveforms to generate an in-phase signal 611 and a quadrature signal 612. From these signals the amplitude and phase information is extracted in block 62 and then fed into separate controllers 63, 64. The amplitude controller 63 is configured to adjust the output 56 of the driver module for maintaining a constant oscillation amplitude. The phase controller 64 is configured to adjust the oscillation frequency to operate near (one of) the resonant peaks of the resonant tank circuit 51. The phase controller 64 can be coupled to a local oscillator 65, providing an oscillation signal which is combined with an output of the amplitude controller and fed as output 56 of the driver circuit. The control unit 60 can be provided as a field-programmable gate array (FPGA).

The injected power, measured at the output 56 of the driver module (or the input of the resonant tank circuit), or the control effort of the amplitude controller 63, contains information regarding a damping of the magnetic field generated by resonant tank circuit 51 and, hence, regarding the detected foreign objects. Therefore, any of these signals can be used as an indication of detected foreign objects. Control unit 60 can comprise further decision blocks, e.g. for comparing a detected or measured signal with a threshold.

Other suitable control implementations can be based on modulation control, instead of phase control. By way of example, a modulated frequency is injected, the frequency modulation causing an amplitude variation in the resonant tank circuit. The mean frequency can then be adapted to minimize or optimize the injected power.

As the plurality of detection coils 211-213 are operated in a sequential manner, the above driver control can be applied sequentially to each of the detection coils. The measurements obtained by the detection coils are hence decoupled. These measurements can be compared. Comparison is simplified when the characteristics of the resonant tank, such as resonance frequency, are identical between the different detection coils.

The performance of the FOD system can be further improved by applying a temperature compensation to the measurement results. E.g. a lookup table can be used to compensate for the temperature dependent losses in the ferrite tiles, detection windings and other nearby metal parts. By so doing, temperature dependent losses in the detection coil itself can be distinguished from losses caused by foreign objects, hence improving the sensitivity of the system.. Alternatively, the lookup table can enable to normalize the measurements of each detection coil and make measurements comparable between the different detection coils and/or make them comparable with historic measurements.

The frequency of the AC current in the detection coils 211-213, i.e. the oscillation frequency, will generally depend on the application and may further depend on the frequency at which the power transmitter coil 111 is operated. The (resonant) frequency of the detection coils is advantageously between 1 kHz and 10 MHz, advantageously between 10 kHz and 1 MHz, advantageously between 20 kHz and 500 kHz, advantageously between 90 kHz and 300 kHz. The indicated frequency ranges may be beneficial for FOD applications in inductive power transfer to electric or hybrid vehicles. The frequency of the current in detection coils 211-213 is advantageously not equal to the driving frequency of the IPT system 10. Assuming the IPT system, e.g. power transmitter coil 111, is driven with a first (resonant) frequency f1, advantageously the driving frequency $f2$ of the detection coils falls between two consecutive odd harmonic frequencies of f1, in which f1 is to be considered a first harmonic. Most advantageously, f2. falls between the first and third harmonic frequency of f1.

The resonant tank circuit for detection coils 21 is advantageously designed such that it has a high quality factor, e.g. higher than or equal to 100, to ensure a high detection sensitivity.

Referring again to Fig. 1, when a metal or otherwise electrically conducting object, i.e. a foreign object, is located inside the magnetic field of the active one of the detection coils, an eddy current is induced in the foreign object which dissipates additional power and tends to decrease the oscillation amplitude in the detection coil, or in other words, the foreign object dampens the magnetic field. The presence of such a foreign object can either be detected by determining the speed with which the amplitude of the oscillation decreases or by determining the amount of power that must be injected in the driver circuit in order to maintain the oscillation amplitude constant or steady. Advantageously, the electrical power injected in driver circuit and detection coil for maintaining a steady magnetic field, e.g. a constant oscillation amplitude, is measured by the control unit 24. The control unit 24 is advantageously configured to compare the measured power, e.g. with a threshold. When for example, the measured power exceeds the threshold, a signal representative of a foreign object detection may be generated in control unit 24. The signal may indicate a faulty situation, e.g. to a user interface, or to transmitter system 11, which may be configured to stop power transfer and/or block the initiation of power transfer. The amount of power increase depends on, for example, the material and size of the metal object, the coupling between the detection coil and the foreign object, and the oscillation frequency. A power measurement advantageously allows for measuring continuously.

Therefore, the dissipation/damping of the magnetic field is advantageously measured, instead of inductance or magnetic coupling between a source coil and a receiver coil. This allows the measurement system to be less sensitive to mechanical variation in the assembly of IPT system 10, e.g. small movements of internal ferrites in housing 114. Small changes in the position of internal ferrites of the system with respect to the FOD detection coil (caused by mechanical deformation and stress) results in a change in inductance. The ferrites are however typically chosen such that they generate very little losses around the driving frequency (f1) of the power transmitter coil. Therefore the losses do not vary significantly under mechanical variation. As a result, measuring the dissipation or damping instead of inductance or magnetic coupling between coils as in the prior art, results in a reduced sensitivity to mechanical variation.

The control unit 24 advantageously comprises a circuit for measuring the electrical power dissipated by each detection coil and its respective magnetic field and optionally a decision block to determine whether there is a foreign object detected. The decision block may comprise program code implementing a foreign object detection algorithm. The decision block may be configured to compare the electrical power dissipated by the various detection coils. If a foreign object is detected by one of the detection coils, this can be easily detected by the comparison, as it will lead to a significantly higher power dissipation. Additionally, the decision block may implement a filter, such as a noise filter, and may be configured to apply the filter to the measured dissipated electrical power and/or the signals output from the comparison. Hence, small deviations between the power dissipation signals will not lead to false detections. The comparison and the filtering can easily be performed because of the substantially equal resonance frequencies of the tank circuits in which the various detection coils are arranged, and the substantially equal self-inductances of the various detection coils.

Optionally, the foreign object detection system further comprises one or more of: a temperature sensor for compensation of temperature variation, a position measurement system for determining the relative position and optionally the relative orientation between the mobile pad and the base pad, a communication interface between the mobile device and the ground assembly to transfer a signature of the mobile device, an internet connection to enable updating the signature information and processing algorithm in-field.

It will be convenient to note that the FOD device can be implemented with one or more detection coils either in the transmitter system 11, or in the receiver system 12, or in both systems in case the interface 13 is too large to bridge by only one FOD device.

Advantageous applications for FOD devices according to aspects described herein are in wireless charging of vehicles. In such a case, the ground assembly may comprise power emitting means for emitting power to a receiving coil of the vehicle assembly. Preferably, the power receiving means comprise at least one transmitting coil composed of one or more loops of conductive material like copper or aluminium suitable for inductive power transfer. The ground assembly may further comprise shielding for the electromagnetic (EM) fields generated during inductive power transfer, for instance to shield people near the vehicle, and electronics, like a printed circuit board (PCB) inside the ground assembly. This shielding may be provided by various materials like magnetic, ferromagnetic or conductive materials. Preferably, the ground side of the transmitting coil is shielded by ferrite. Advantageously, the ground assembly further comprises an additional coil of a conductive material arranged outside the perimeter of the transmitting coil. This short circuited coil provides a shield to reduce the level of stray fields leaking into the environment. The ground assembly further comprises a high frequency power supply unit that powers the transmitting coil with high current (e.g. 10A and above) and/or voltage (e.g. 100V and above), single phase, high frequency AC (e.g. kHz to MHz) electrical energy from the single phase or three phase mains. The ground assembly is advantageously housed in a housing that eliminates dirt, debris or other materials form damaging or limiting the performance of the ground assembly components.

The ground assembly advantageously comprises additional auxiliary components that for instance provide safety features. One of those components is a foreign object detection (FOD) device for detecting metallic or electrically conductive debris in the magnetic field space of the transmitting coil. Additional components may be included which provide living object protection (LOP) for detecting and/or deterring living objects near the transmitting coil, and/or additional components for positioning detection of a mobile pad relative to the ground assembly.

The mobile pad, e.g. a vehicle assembly, may comprise power receiving means for receiving power from a transmitting coil of the ground assembly. Advantageously, the power receiving means comprise at least one receiving coil composed of one or more loops of conductive material suitable for inductive power transfer. The mobile pad may further comprise shielding for the electric and magnetic fields generated during inductive power transfer, for instance to shield people inside or near the pad, and electronics, like a printed circuit board (PCB) inside the pad. This shielding may be provided by various materials like magnetic, ferromagnetic or conductive materials. Preferably, the vehicle side of the receiving coil is shielded by ferrite. Advantageously, an additional coil of conductive material like copper or aluminium forming a short circuit is provided outside the perimeter of the receiving coil. This short circuited shielding coil provides a passive shield to reduce the level of stray fields leaking into the environment. Optionally, the short circuit is inducible or the impedance can be controlled to regulate the influence on the EM field, which can for instance be beneficial when a mobile pad positioning system is provided (either in the ground assembly or the mobile pad) supported by an EM based component. The shielding coil can also be powered to provide an active shield. The mobile pad may further comprise a housing to eliminate dirt, debris or other materials form damaging or limiting the performance of components inside the housing.

**Claims**

1.  Apparatus for inductive power transfer, comprising a power transfer coil (111) for contactless power transfer, a magnetic shield for shaping a first electromagnetic field of the power transfer coil and a foreign object detecting device (20), the foreign object detecting device comprising a means for generating a second electromagnetic field to detect foreign objects in a predetermined space, a plurality of detection coils (211, 212, 213) coupled in respective tank circuits configured to sense the second electromagnetic field, and a switching device (222) configured to selectively close the tank circuits, **characterised in that** at least one coil of the plurality of detection coils has a cross section and/or a number of windings different from another one of the plurality of detection coils, **in that** each coil of the plurality of detection coils (211, 212, 213) is configured for having a substantially equal self-inductance and **in that** the tank circuits have a substantially equal resonance frequency.

2.  Apparatus according to claim 1, wherein a layer essentially parallel to the power transfer coil (111) comprises the magnetic shield.

3.  Apparatus according to any one of the preceding claims, wherein coils of the plurality of detection coils (211, 212, 213) are essentially co-planar.

4.  Apparatus according to any one of the preceding claims, wherein the magnetic shield comprises ferrite.

5.  Apparatus according to any one of the preceding claims, wherein at least one of a cross section of an outer winding and a number of windings of each coil of the plurality of detection coils (211, 212, 213) is configured in correlation with at least one of a proximity and an amount of the magnetic shield.

6.  Apparatus according to claim 5, wherein the magnetic shield comprises ferrite, and wherein the correlation is negative in that at least one of a greater proximity and a greater amount corresponds to at least one of a smaller cross section and a smaller number of windings.

7.  Apparatus according to any one of the preceding claims, wherein each tank circuit comprises a separate respective capacitor (321, 322, 323).

8.  Apparatus according to any one of the claims 1 to 6, comprising a common capacitor, wherein the switching device (222) is configured to alternatingly connect the common capacitor to the plurality of detection coils (211, 212, 213) thereby alternatingly forming the tank circuits.

9. Apparatus according to any one of the preceding claims, wherein the switching device (222) is a multiplexer.

10. Apparatus according to any one of the preceding claims, wherein, when closing the tank circuit corresponding to a first one of the plurality of detection coils (211, 212, 213), the switching device (222) is configured to open terminals of second ones of the plurality of detection coils (211, 212, 213).

11. Apparatus according to any one of the preceding claims, wherein the switching device (222) is configured to close only one of the tank circuits at a time.

12. Apparatus according to any one of the preceding claims, wherein each one of the plurality of detection coils (211, 212, 213) are configured for being exposed to parts of the first electromagnetic field having a substantially equal strength and an opposing sign, preferably wherein at least one of the power transfer coil (111) and a coil of the plurality of detection coils (211, 212, 213) comprises lobes with opposing winding directions.

13. Apparatus according to any one of the previous claims, further comprising a controller (24) configured to compare the second electromagnetic fields sensed by the plurality of detection coils (211, 212, 213) and to detect foreign objects based on an output of the comparison, preferably wherein the controller (24) is configured to detect foreign objects by comparing the output of the comparison with a threshold value.

14. Vehicle charging system (12) comprising the apparatus of any one of the preceding claims.

15. Method for detecting foreign objects in a predetermined space using an apparatus of any one of claims 1 to 13 or a vehicle charging system of claim 14, wherein in the predetermined space a second electromagnetic field is induced by the means and wherein foreign objects are detected in the predetermined space through a plurality of tank circuits comprising a plurality of detection coils (211, 212, 213), wherein the plurality of tank circuits are selectively closed, wherein the second electromagnetic field induces a current in the closed one of the plurality of tank circuits (211, 212, 213), preferably wherein only one of the tank circuits (211, 212, 213) is closed at a time.


**Patentansprüche**

1. Vorrichtung zur induktiven Energieübertragung, umfassend eine Energieübertragungsspule (111) zur kontaktlosen Energieübertragung, eine magnetische Abschirmung zum Formen eines ersten elektromagnetischen Feldes der Energieübertragungsspule und eine Fremdkörpererkennungsvorrichtung (20), wobei die Fremdkörpererkennungsvorrichtung umfasst: ein Mittel zum Erzeugen eines zweiten elektromagnetischen Feldes, um Fremdkörper in einem vorgegebenen Raum zu erkennen, eine Vielzahl von Erkennungsspulen (211, 212, 213), die in jeweiligen Schwingkreisen gekoppelt sind und konfiguriert sind, um das zweite elektromagnetische Feld erfassen, und eine Schaltvorrichtung (222), die konfiguriert ist, um die Schwingkreise selektiv zu schließen, **dadurch gekennzeichnet, dass** mindestens eine Spule der Vielzahl von Erkennungsspulen einen Querschnitt und/oder eine Anzahl von Wicklungen aufweist, die sich von einer weiteren der Vielzahl von Erkennungsspulen unterscheiden, dadurch, dass jede Spule der Vielzahl von Erkennungsspulen (211, 212, 213) so konfiguriert ist, dass sie eine im Wesentlichen gleiche Selbstinduktivität aufweist und dass die Schwingkreise eine im Wesentlichen gleiche Resonanzfrequenz aufweisen.

2. Vorrichtung nach Anspruch 1, wobei eine Schicht, die im Wesentlichen parallel zu der Energieübertragungsspule (111) verläuft, die magnetische Abschirmung umfasst.

3. Vorrichtung nach einem der vorhergehenden Ansprüche, wobei die Spulen der Vielzahl von Erkennungsspulen (211, 212, 213) im Wesentlichen koplanar sind.

4. Vorrichtung nach einem der vorhergehenden Ansprüche, wobei die magnetische Abschirmung Ferrit umfasst.

5. Vorrichtung nach einem der vorhergehenden Ansprüche, wobei mindestens eines aus einem Querschnitt einer äußeren Wicklung und einer Anzahl von Wicklungen jeder Spule der Vielzahl von Erkennungsspulen (211, 212, 213) in Korrelation mit mindestens einem aus einer Nähe und einer Menge der magnetischen Abschirmung.

**6.** Vorrichtung nach Anspruch 5, wobei die magnetische Abschirmung Ferrit umfasst und wobei die Korrelation dahingehend negativ ist, dass mindestens eines aus einer größeren Nähe und einer größeren Menge mindestens einem kleineren Querschnitt und einer kleineren Anzahl von Windungen entspricht.

**7.** Vorrichtung nach einem der vorhergehenden Ansprüche, wobei jeder Schwingkreis einen separaten jeweiligen Kondensator (321, 322, 323) umfasst.

**8.** Vorrichtung nach einem der Ansprüche 1 bis 6, umfassend einen gemeinsamen Kondensator, wobei die Schaltvorrichtung (222) konfiguriert ist, um den gemeinsamen Kondensator abwechselnd mit der Vielzahl von Erkennungsspulen (211, 212, 213) verbindet und dadurch abwechselnd die Schwingkreise bildet.

**9.** Vorrichtung nach einem der vorhergehenden Ansprüche, wobei die Schaltvorrichtung (222) ein Multiplexer ist.

**10.** Vorrichtung nach einem der vorhergehenden Ansprüche, wobei die Schaltvorrichtung (222) konfiguriert ist, um beim Schließen des Schwingkreises, der einer ersten der Vielzahl von Erkennungsspulen (211, 212, 213) entspricht, die Anschlüsse zweiter Spulen der Vielzahl von Erkennungsspulen (211, 212, 213) zu öffnen.

**11.** Vorrichtung nach einem der vorhergehenden Ansprüche, wobei die Schaltvorrichtung (222) konfiguriert ist, um jeweils nur einen der Schwingkreise zu schließen.

**12.** Vorrichtung nach einem der vorhergehenden Ansprüche, wobei jede der Vielzahl von Erkennungsspulen (211, 212, 213) konfiguriert ist, um Teilen des ersten elektromagnetischen Feldes ausgesetzt zu werden, das eine im Wesentlichen gleiche Stärke und ein entgegengesetztes Vorzeichen aufweist, vorzugsweise wobei mindestens eine der Energieübertragungsspulen (111) und eine Spule der Vielzahl von Erkennungsspulen (211, 212, 213) Keulen mit entgegengesetzten Wicklungsrichtungen aufweisen.

**13.** Vorrichtung nach einem der vorhergehenden Ansprüche, ferner umfassend eine Steuereinheit (24), die konfiguriert ist, um die durch die Vielzahl von Erkennungsspulen (211, 212, 213) erfassten zweiten elektromagnetischen Felder zu vergleichen und Fremdkörper auf der Grundlage eines Ergebnisses des Vergleichs zu erkennen, vorzugsweise wobei die Steuereinheit (24) konfiguriert ist, um Fremdkörper durch Vergleichen des Ergebnisses des Vergleichs mit einem Schwellenwert zu erkennen.

**14.** Fahrzeugladesystem (12), umfassend die Vorrichtung nach einem der vorhergehenden Ansprüche.

**15.** Verfahren zum Erkennen von Fremdkörpern in einem vorgegebenen Raum unter Verwendung einer Vorrichtung nach einem der Ansprüche 1 bis 13 oder in einem Fahrzeugladesystems nach Anspruch 14, wobei in dem vorgegebenen Raum ein zweites elektromagnetisches Feld durch das Mittel induziert wird und wobei Fremdkörper in dem vorgegebenen Raum durch eine Vielzahl von Schwingkreisen erkannt werden, die eine Vielzahl von Erkennungsspulen (211, 212, 213) umfassen, wobei die Vielzahl von Schwingkreisen selektiv geschlossen werden, wobei das zweite elektromagnetische Feld einen Strom in dem geschlossenen der Vielzahl von Schwingkreisen (211, 212, 213) induziert, vorzugsweise wobei jeweils nur einer der Schwingkreise (211, 212, 213) geschlossen ist.

**Revendications**

**1.** Appareil de transfert de puissance inductive, comprenant une bobine de transfert de puissance (111) pour un transfert de puissance sans contact, un écran magnétique pour façonner un premier champ électromagnétique de la bobine de transfert de puissance et un dispositif de détection de corps étrangers (20), le dispositif de détection de corps étrangers comprenant un moyen pour générer un second champ électromagnétique pour détecter des corps étrangers dans un espace prédéterminé, une pluralité de bobines de détection (211, 212, 213) couplées dans des circuits oscillants respectifs conçus pour détecter le second champ électromagnétique, et un dispositif de commutation (222) conçu pour fermer sélectivement les circuits oscillants, **caractérisé en ce qu'**au moins une bobine de la pluralité de bobines de détection présente une section transversale et/ou un certain nombre d'enroulements différent d'une autre de la pluralité de bobines de détection, **en ce que** chaque bobine de la pluralité de bobines de détection (211, 212, 213) est conçue pour avoir une auto-inductance sensiblement égale et **en ce que** les circuits oscillants ont une fréquence de résonance sensiblement égale.

**2.** Appareil selon la revendication 1, dans lequel une couche essentiellement parallèle à la bobine de transfert de puissance (111) comprend l'écran magnétique.

3. Appareil selon l'une quelconque des revendications précédentes, dans lequel les bobines de la pluralité de bobines de détection (211, 212, 213) sont essentiellement coplanaires.

4. Appareil selon l'une quelconque des revendications précédentes, dans lequel l'écran magnétique comprend de la ferrite.

5. Appareil selon l'une quelconque des revendications précédentes, dans lequel une section transversale d'un enroulement externe et/ou un certain nombre d'enroulements de chaque bobine de la pluralité de bobines de détection (211, 212, 213) est (sont) conçu(s) en corrélation avec une proximité et/ou une quantité du bouclier magnétique.

6. Appareil selon la revendication 5, dans lequel l'écran magnétique comprend de la ferrite, et dans lequel la corrélation est négative en ce sens qu'une plus grande proximité et/ou une plus grande quantité correspond à une plus petite section transversale et/ou un plus petit nombre d'enroulements.

7. Appareil selon l'une quelconque des revendications précédentes, dans lequel chaque circuit oscillant comprend un condensateur respectif séparé (321, 322, 323).

8. Appareil selon l'une quelconque des revendications 1 à 6, comprenant un condensateur commun, dans lequel le dispositif de commutation (222) est conçu pour connecter alternativement le condensateur commun à la pluralité de bobines de détection (211, 212, 213), formant ainsi alternativement les circuits oscillants.

9. Appareil selon l'une quelconque des revendications précédentes, dans lequel le dispositif de commutation (222) est un multiplexeur.

10. Appareil selon l'une quelconque des revendications précédentes, dans lequel, lors de la fermeture du circuit oscillant correspondant à une première bobine de la pluralité de bobines de détection (211, 212, 213), le dispositif de commutation (222) est conçu pour ouvrir les bornes des secondes bobines de la pluralité de bobines de détection (211, 212, 213).

11. Appareil selon l'une quelconque des revendications précédentes, dans lequel le dispositif de commutation (222) est conçu pour fermer un seul des circuits oscillants à la fois.

12. Appareil selon l'une quelconque des revendications précédentes, dans lequel chaque bobine de la pluralité de bobines de détection (211, 212, 213) est conçue pour être exposée à des parties du premier champ électromagnétique ayant une intensité sensiblement égale et un signe opposé, de préférence dans lequel une bobine de transfert de puissance (111) et/ou une bobine de la pluralité de bobines de détection (211, 212, 213) comprend des lobes avec des sens d'enroulement opposés.

13. Appareil selon l'une quelconque des revendications précédentes, comprenant en outre un contrôleur (24) conçu pour comparer les seconds champs électromagnétiques détectés par la pluralité de bobines de détection (211, 212, 213) et pour détecter des corps étrangers sur la base d'un résultat de la comparaison, de préférence dans lequel le contrôleur (24) est conçu pour détecter des corps étrangers en comparant la sortie de la comparaison avec une valeur seuil.

14. Système de recharge de véhicule (12) comprenant l'appareil selon l'une quelconque des revendications précédentes.

15. Procédé de détection de corps étrangers dans un espace prédéterminé au moyen d'un appareil selon l'une quelconque des revendications 1 à 13 ou un système de recharge de véhicule selon la revendication 14, dans lequel dans l'espace prédéterminé un second champ électromagnétique est induit par le moyen et dans lequel des corps étrangers sont détectés dans l'espace prédéterminé à travers une pluralité de circuits oscillants comprenant une pluralité de bobines de détection (211, 212, 213), la pluralité de circuits oscillants étant sélectivement fermés, le second champ électromagnétique induisant un courant dans le circuit oscillant fermé de la pluralité de circuits oscillants (211, 212, 213), de préférence un seul des circuits oscillants (211, 212, 213) étant fermé à la fois.

FIG 1

FIG 2

FIG 3

FIG 4

FIG 5

FIG 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150323694 A
- US 9178361 B

- WO 201905777 A1